# EUROPEAN PATENT APPLICATION

(11) **EP 2 595 156 A2**
(43) Date of publication of application: **22.05.2013**
(21) Application number: 12193050.7
(22) Date of filing: 16.11.2012
(51) Int. Cl.: G21C 19/00

(54) **Preventive maintenance apparatus and preventive maintenance method for inner surface of piping**

(30) Priority: 18.11.2011 JP 2011252375
(71) Applicant: Hitachi-GE Nuclear Energy, Ltd., Hitachi-shi Ibaraki 317-0073 (JP); Sugino Machine Limited, Uozu-shi, Toyama 937-8511 (JP)
(72) Inventor: Inada, Takashi, Ibaraki 317-0073 (JP); Yoshikubo, Fujio, Ibaraki 317-0073 (JP); Murakami, Nobuo, Ibaraki 317-0073 (JP); Anzai, Tadashi, Ibaraki 317-0073 (JP); Kanno, Akihiro, Ibaraki 317-0073 (JP); Nakada, Masahiro, Toyama 937-8511 (JP); Takakura, Eiji, Toyama 937-8511 (JP)
(74) Representative: MERH-IP Matias Erny Reichl Hoffmann

(57) **Abstract**

A preventive maintenance apparatus has a movable body (2) and a water jet peening (WJP) apparatus (3). The movable body installs a jet nozzle for driving and floating bodies (25) on a base body (62). The movable body suspended in cooling water in a reactor pressure vessel jets high-pressure water from a high-pressure pump from the jet nozzle, advances in the cooling water, and is inserted into a pipe (67) with the cooling water filled which is connected to the reactor pressure vessel. The posture of the movable body in the pipe is controlled by buoyancy adjustment of the floating bodies and the movable body can easily pass through a curve pipe portion (69). The high-pressure water from a high-pressure pump is jetted from jet nozzles of the WJP apparatus and for the inner surface of a vertical pipe portion, the WJP is executed.

## Description

### BACKGROUND OF THE INVENTION

### [Technical Field]

The present invention relates to a preventive maintenance apparatus and a preventive maintenance method for an inner surface of a piping and more particularly to a preventive maintenance apparatus and a preventive maintenance method for an inner surface suitable for applying to the preventive maintenance of an inside of a piping connected to a reactor pressure vessel of a nuclear power plant.

### [Background Art]

For inspection and preventive maintenance of the inside of the piping connected to the reactor pressure vessel of the nuclear power plant, several plans are proposed.

Japanese Patent Laid-Open No. 8(1996)-5773 describes a preventive maintenance apparatus and a preventive maintenance method for performing decontamination, washing, and modification of an inner surface of a riser pipe passing through the reactor pressure vessel and reaching the inside the reactor pressure vessel, in a boiling water reactor. The preventive maintenance apparatus is suspended in the reactor pressure vessel from the upper portion to a predetermined position in the riser pipe and is held inside the riser pipe with a fixing leg installed in the preventive maintenance apparatus pressed to the inner surface of the riser pipe. As a preventive maintenance apparatus, an inner surface processing apparatus, an inner surface washing apparatus, an inner surface modification apparatus, and an inner surface inspection apparatus are used. These units are held by fixing legs in the riser pipe and, for the inner surface of the riser pipe, processing, washing, modification, and inspection are performed.

A piping inner operation apparatus having a head unit, a head swing drive unit, a curve drive unit, and a travelling drive unit is described in Japanese Patent Laid-Open No. 2008-14447. An arm is rotatably attached to the body of the head swing drive unit and one end of the curve drive unit is rotatably attached to the arm. One end of the travelling drive unit is rotatably attached to the other end of the curve drive unit. The head unit is attached to a front of the body of the head swing drive unit. The piping inner operation apparatus is inserted into a riser pipe installed in a reactor pressure vessel from the upper end thereof. A jet nozzle for water jet peening is attached to the head unit and executes the water jet peening of an inner surface of the riser pipe.

Japanese Patent Laid-Open No. 2001-264482 describes an inner surface inspection apparatus of piping. The inner surface inspection apparatus is inserted into a riser pipe passing through a reactor pressure vessel and installed in a reactor pressure vessel from the outside of the reactor pressure vessel and moves in the riser pipe upward from underneath. In the inner surface inspection apparatus, a head for fluorescent penetrant inspection is installed.

### [Citation List]

### [Patent Literature]

[Patent Literature 1] Japanese Patent Laid-Open No. 8(1996)-5773
[Patent Literature 2] Japanese Patent Laid-Open No. 2008-14447
[Patent Literature 3] Japanese Patent Laid-Open No. 2001-264482

### SUMMARY OF THE INVENTION

### [Technical Problem]

Japanese Patent Laid-Open No. 8(1996)-5773 and Japanese Patent Laid-Open No. 2008-14447 describe that the preventive maintenance apparatus is disposed in the axial direction of the reactor pressure vessel, is inserted into the piping from an opening formed at an upper end of the piping installed in the reactor pressure vessel, and moves in the piping downward from above. However, the techniques described in these applications published are methods for moving the preventive maintenance apparatus from the upper end side of the piping to a predetermined position in the piping. In these methods, when access from the upper end side of the piping is impossible, it is difficult to permit the preventive maintenance apparatus to access into the piping from a lower end side of the piping.

Further, the technique described in Japanese Patent Laid-Open No. 2001-264482 is a method for permitting the inner surface inspection apparatus to access from the lower end side of the piping into the piping, though the method is a method when the lower end side of the piping exists in gas and when the lower end side of the piping exists in water, it is difficult to permit the inner surface inspection apparatus to access in the piping.

An object of the present invention is to provide a preventive maintenance apparatus and a preventive maintenance method for an inner surface capable of easily executing preventive maintenance operation for an inner surface of a piping with water filled.

### [Solution to Problem]

A feature of the present invention for accomplishing the above object is a preventive maintenance apparatus comprising a base body; a driving apparatus installed on the base body for advancing the base body; a water jet peening apparatus installed on the base body; a plurality of floating bodies respectively installed on a leading portion and rear of the base body; a plurality of clamp apparatuses installed on the base body for making contact with the inner surface of the piping when holding the base body in the piping; and a camera installed on the base body.

Since the preventive maintenance apparatus has the plurality of floating bodies respectively installed on the leading portion and on the rear of the base body, the base body having the driving apparatus, the water jet peening apparatus, the plurality of floating bodies, the plurality of clamp apparatuses, and the camera can be easily inserted into the piping with water internally filled which is connected to the reactor pressure vessel with water filled through a opening of the piping which is released into the reactor pressure vessel, and into a vertical pipe portion of the piping including a curve pipe portion and the vertical pipe portion extended to it, the base body can be inserted from underneath. Therefore, even when the base body cannot be inserted into the piping from the upper portion, the preventive maintenance operation, that is, the water jet peening can be executed easily for the inner surface of the piping.

### [Advantageous Effect of the Invention]

According to the present invention, the preventive maintenance operation for the inner surface of the piping with water internally filled which is connected to the reactor pressure vessel with water filled can be executed easily.

### BRIEF DESCRIPTION OF THE DRAWINGS

FIG. 1 is a structural diagram showing a preventive maintenance apparatus which is a preferable embodiment of the present invention.
FIG. 2 is an enlarged view showing a movable body of a preventive maintenance apparatus shown in FIG. 1.
FIG. 3 is a detailed structural diagram showing a water jet peening apparatus and a movable apparatus installed in a movable body shown in FIG. 2.
FIG. 4 is an enlarged front view showing a camera unit shown in FIG. 1.
FIG. 5 is a detailed structural diagram showing an air supply apparatus for supplying air to the floating bodies installed in a movable body shown in FIG. 2.
FIG. 6 is a detailed structural diagram showing a clamp apparatus installed in a movable body shown in FIG. 2.
FIG. 7 is an explanatory drawing showing a state of a clamp apparatus shown in FIG. 6 when a movable body shown in FIG. 2 is clamped to an inner surface of a piping.

### DETAILED DESCRIPTION OF THE PREFERRED EMBODIMENTS

Embodiment of the present invention will be explained below.

### [Embodiment]

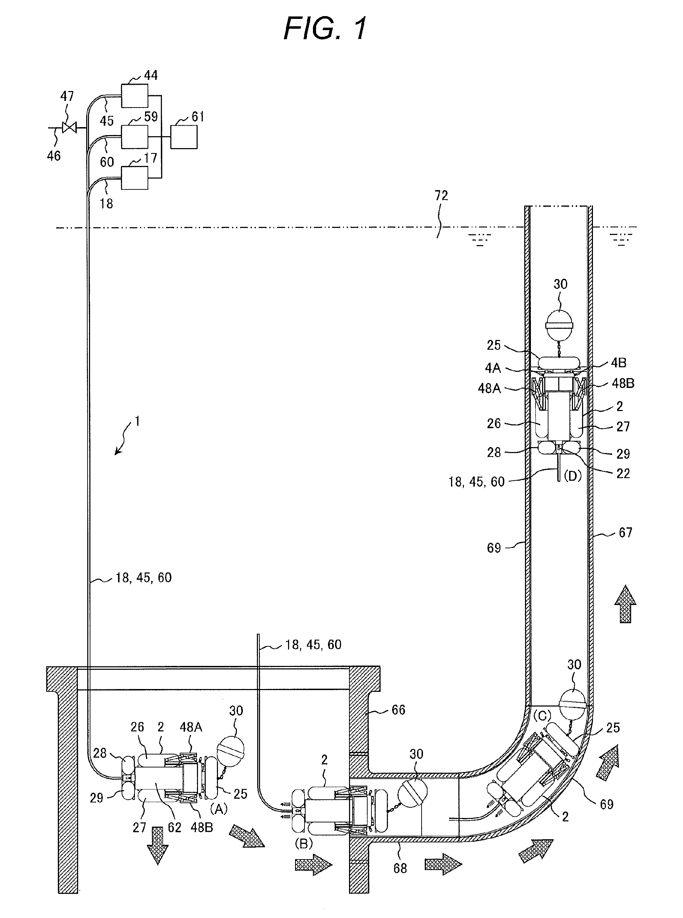

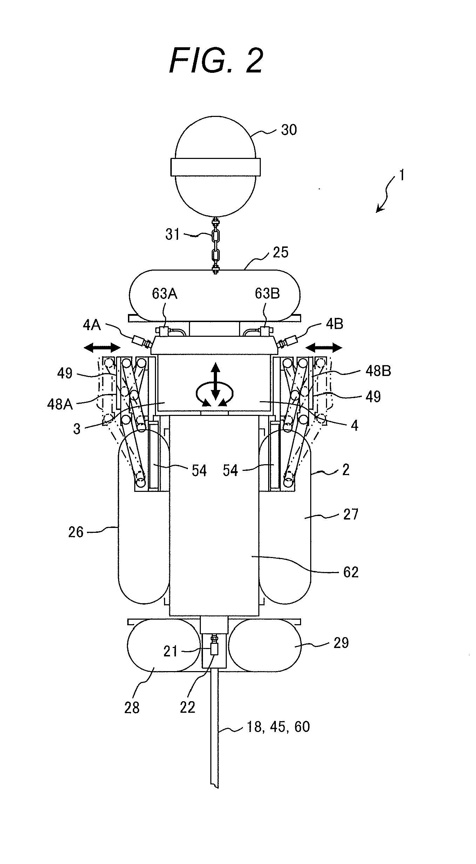

A preventive maintenance apparatus which is a preferable embodiment of the present invention will be explained by referring to FIGs. 1 and 2.

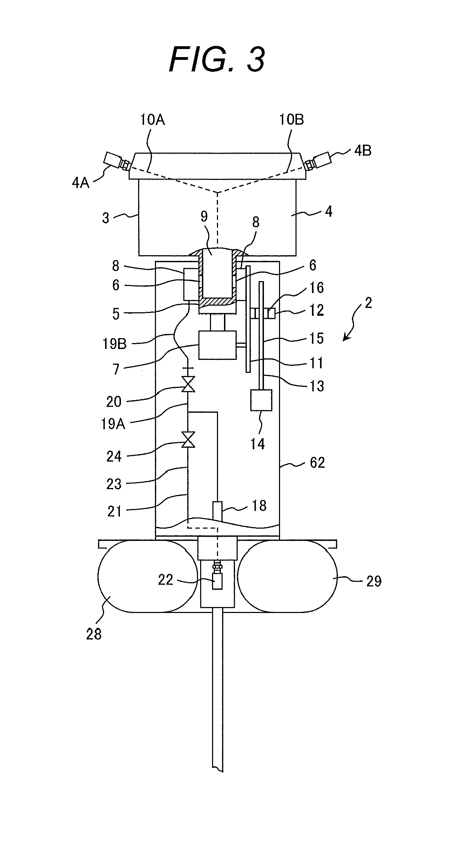

A preventive maintenance apparatus 1 of the present embodiment is provided with a movable body 2 and a water jet peening apparatus 3. The movable body 2 has a driving apparatus 21, floating bodies 25, 26, 27, 28, 29, and 30, clamp apparatuses 48A and 48B, a base body 62, and camera units 63A and 63B. Furthermore, the water jet peening apparatus 3 has jet nozzles 4A and 4B, a cavitation generator (a water jet peening bubble generation apparatus) 4, a motor (a nozzle rotation apparatus) 7 (refer to FIG. 3), a high-pressure pump (a pressurized water supply apparatus) 17, and a nozzle movable unit 13 (refer to FIG. 3). The driving apparatus 21, the seven floating bodies (in FIGs. 1, 2, and 5, the six floating bodies 25, 26, 27, 28, 29, and 30 among the seven floating bodies are drawn), the three clamp apparatuses (in FIGs. 1 and 2, the two clamp apparatuses 48A and 48B are drawn among the three clamp apparatuses), the cavitation generator 4, the motor 7, and the nozzle movable unit 13 are installed in the base body 62 with space internally formed. The base body 62, for example, includes a cylindrical side wall, and the side wall is blocked at its both ends, thus the space is formed internally.

The cavitation generator 4, as described later, is rotatably attached to a leading portion of the base body 62. The floating body 25 is attached to a leading portion of the cavitation generator 4 and the floating body 30 is connected to a front of the floating body 25 by a connection member (for example, a chain) 31. The floating bodies 28 and 29 are attached to the rear surface of the base body 62. The three floating bodies including the floating bodies 26 and 27 are attached to an outer surface of the cylindrical side wall of the base body 62 at even intervals in a peripheral direction. The three clamp apparatuses including the clamp apparatuses 48A and 48B are arranged on the outer surface of the cylindrical side wall of the base body 62 at mutual intervals of the floating bodies attached to the outer surface and are installed at even intervals in the peripheral direction.

The water jet peening apparatus 3 will be concretely explained by referring to FIGs. 1 and 3. A rotary shaft 5 installed on a rear surface of the cavitation generator 4 is inserted from the front surface of the base body 62 into the base body 62 and is connected to a rotary shaft of the motor 7 disposed in the base body 62. A through portion of the rotary shaft 5 of the base body 62 has a water seal structure by seal. A slide plate 11 disposed in the base body 62 is attached to a support member (not drawn) fixed to the inner surface of the base body 62 so as to move in the axial direction of the base body 62. The motor 7 is fixed to the slide plate 11.

The nozzle movable unit 13 disposed in the base body 62 includes a motor 14, a ball screw 15, and a nut 16. A nut hold member 12 is attached to the slide plate 11 and the nut 16 is attached to the nut hold member 12. The motor 14 is attached to the inner surface of the base body 62 and the rotary shaft of the motor 14 is connected to one end of the ball screw 15. The ball screw 15 mates with the nut 16 and the other end of the ball screw 15 is held by a bearing (not drawn) installed on the inner surface of the base body 62.

The jet nozzle 4A and the jet nozzle 4B which are disposed in the opposite directions of 180° are installed on the cavitation generator 4. With respect to the jet nozzle of the water jet peening apparatus 3, one jet nozzle or three jet nozzles may be installed. A water supply path 9 is formed in the rotary shaft 5 and water supply path 9 branches to water supply paths 10A and 10B via the inside of the cavitation generator 4. The water supply path 10A is connected to the jet nozzle 4A and the water supply path 10B is connected to the jet nozzle 4B. A circularly chamber 8 is attached to the rotary shaft 5 around it. The region in the chamber 8 is connected to the water supply path 9 in the rotary shaft 5 by a plurality of openings 6 formed in the rotary shaft 5. The chamber 8 is fixed to the slide plate 11.

A high-pressure hose 18 connected to the high-pressure pump 17 is attached to the base body 62 via the interval between the floating bodies 28 and 29 and reaches the inside of the base body 62. A pipe 19A to which a valve 20 is attached and a pipe 23 to which a valve 24 is attached are connected to the high-pressure hose 18 and are installed in the base body 62. A flexible high-pressure hose 19B is connected to the pipe 19A, is attached to the chamber 8, and is connected with the region in the chamber 8.

The driving apparatus 21 has a jet nozzle 22, the pipe 23, and the valve 24. The jet nozzle 22 is disposed between the floating bodies 28 and 29 and is attached to the rear surface of the base body 62. The pipe 23 is connected to the jet nozzle 22.

The valves 20 and 24 are a switching apparatus for switching the supply of high-pressure water discharged from the high-pressure pump 17 to the jet nozzle 22 and the supply of the high-pressure water to the cavitation generator 4 and the jet nozzles 4A and 4B.

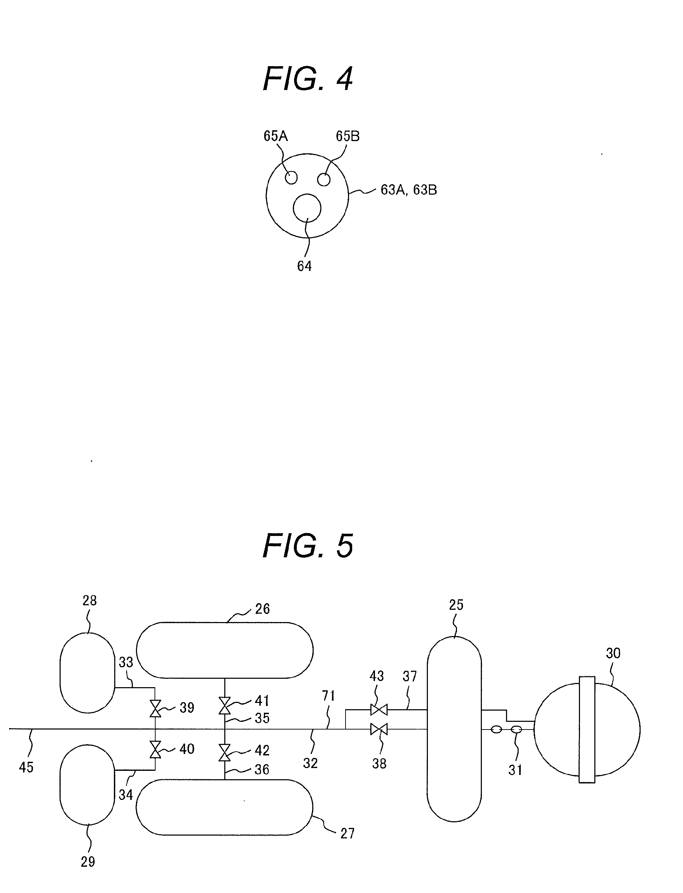

The camera units 63A and 63B are disposed in the opposite directions of 180° and are attached to the cavitation generator 4. The camera unit 63A is disposed in the vicinity of the jet nozzle 4A and the camera unit 63B is disposed in the vicinity of the jet nozzle 4B. The camera units 63A and 63B, as shown in FIG. 4, include a camera 64 and a pair of illuminations 65A and 65B disposed on the side of the camera 64.

An air supply apparatus 71 for supplying air to each floating body will be explained by referring to FIGs. 1 and 5. The air supply apparatus 71 includes pipes 32, 33, 34, 35, and 36, a blower 44, and air hoses 37 and 45. The pipes 32, 33, 34, 35, and 36 are disposed in the base body 62 and are installed on the inner surface of the base body 62. The air hose 45 connected to the blower 44 is attached to the base body 62 via the interval between the floating bodies 28 and 29 and reaches the inside of the base body 62. The pipe 32 to which a valve 38 is attached is connected to the air hose 45 and furthermore is connected to the floating body 25. The pipe 33 to which a valve 39 is attached is connected to the pipe 32 and is connected to the floating body 28. The pipe 34 to which a valve 40 is attached is connected to the pipe 32 and is connected to the floating body 29. The pipe 35 to which a valve 41 is attached is connected to the pipe 32 and is connected to the floating body 26. The pipe 36 to which a valve 42 is attached is connected to the pipe 32 and is connected to the floating body 27. The air hose 46 to which a valve 47 is attached is connected to the air hose 45. Although not drawn in FIG. 5, the residual one floating body installed on the outer surface of the cylindrical side wall of the base body 62 is connected to the pipe 32 by a pipe with a valve installed.

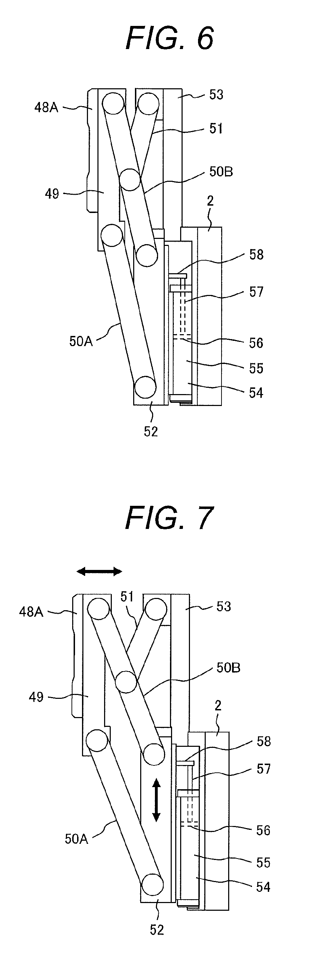

The three clamp apparatuses installed on the outer surface of the cylindrical side wall of the base body 62 will be explained below. These clamp apparatuses have the same structure, so that the clamp apparatus 48A will be explained as an example. The clamp apparatus 48A, as shown in FIG. 6, has a pressing member 49, links 50A, 50B, and 51, a slide plate 52, and a drive apparatus 54. The slide plate 52 is attached to a support plate (not drawn) fixed to the outer surface of the base body 62 and disposed in parallel with the outer surface so as to move in the axial direction of the base body 62. The link 50A and link 50B are arranged away from each other and in parallel with each other and the respective one ends of the links 50A and 50B are rotatably attached to the slide plate 52. The respective other ends of the links 50A and 50B are rotatably attached to the pressing member 49. One end of the link 51 is rotatably attached to the link 50B at a middle of the link 50B in the longitudinal direction. The other end of the link 51 is attached to the outer surface of the base body 62 and is rotatably attached to a support member 53 extending along the side of the cavitation generator 4.

The drive apparatus 54 has a cylinder 55, a piston 56, a piston rod 57, and a connection member 58. The cylinder 55 with the piston 56 internally disposed is attached to the outer surface of the base body 62. The connection member 58 is connected to the piston rod 57 attached to the piston 56 and furthermore is attached to the slide plate 52. The connection member 58 is disposed perpendicularly to the piston rod 57. The air hose 60 connected to the blower 59 (see FIG. 1) is attached to the base body 62, is disposed inside the base body 62, and is connected to the cylinder 55.

Although not drawn, cables for supplying power to the motors 7 and 14 and cables for transferring control commands from a control board 61 to the valve or motor installed in the base body 62 are connected to the base body 62.

An example of the preventive maintenance method for the inner surface of the piping using the preventive maintenance apparatus 1 will be explained below by referring to FIG. 1. A preventive maintenance object in the preventive maintenance method of the present embodiment is a pipe 67 connected to a reactor pressure vessel 66 and including a horizontal pipe portion 68, a curve pipe portion 69, and a vertical pipe portion 70.

The preventive maintenance method for the inner surface of the piping is executed during the period of the periodic inspection of the nuclear power plant. The nuclear power plant finishing an operation in a certain operation cycle is stopped and in the operation stop state, the periodic inspection of the nuclear power plant is executed. A reactor vessel closure head of the reactor pressure vessel 66 is removed and cooling water 72 is filled in the reactor pressure vessel 66 and a pool formed above the reactor pressure vessel 66. The high-pressure pump 17, the blowers 44 and 59, and the control board 61 are installed on a floor surface positioned above the pool filled with the cooling water 72. The cooling water 72 is also filled in the horizontal pipe portion 68, the curve pipe portion 69, and the vertical pipe portion 70 of the pipe 67.

By the control command from the control board 61, the valves 39 to 42 and the valve installed on the pipe connected to the residual one floating body installed on the outer surface of the cylindrical side wall of the base body 62 are opened to drive the blower 44. At this time, the valves 38, 43, and 47 are closed. The movable body 2 is placed on the aforementioned floor surface and air pressurized by the blower 44 is introduced into the base body 62 through the air hose 45 and reaches the inside of the pipe 32. Furthermore, this air is respectively supplied into the floating body 28 by the pipe 33, the floating body 29 by the pipe 34, the floating body 26 by the pipe 35, the floating body 27 by the pipe 36, and furthermore the residual floating body. The floating bodies 26 to 29 are expanded by the supply of air and when these floating bodies become a predetermined size, the valves 39 to 42 are totally enclosed by the control command from the control board 61 and the blower 44 is stopped. The floating bodies 25 and 30 with no air supplied are not expanded.

The movable body 2 with the four floating bodies expanded is suspended by a ceiling crane (not drawn) installed in a reactor building (not drawn) where the reactor pressure vessel 66 is installed and is lowered into the reactor pressure vessel 66. When the lowered movable body 2 reaches a position in an axial direction of the reactor pressure vessel 66 of the opening of the pipe 67 opened in the reactor pressure vessel 66, the decent of the movable body 2 is stopped. The pipe 67 is a preventive maintenance object. By the control command from the control board 61, the valves 38 and 43 are opened, and the blower 44 is driven, and the air discharged from the blower 44 is supplied into the floating body 25 through the air hose 45 and the pipe 32 and furthermore into the floating body 30 through the pipe 37. At this time, the valve 47 is totally enclosed. When the respective pressures in the floating bodies 25 and 30 are controlled to predetermined pressures and the floating bodies 25 and 30 become predetermined magnitude, by the control command from the control board 61, the valves 38 and 43 are totally enclosed and the blower 44 is stopped. The floating bodies 25 and 30 are expanded, thus the leading portion of the movable body 2 is lifted up and the movable body 2 is put into an almost horizontal state (a state shown in (A) of FIG. 1). The respective pressures in the floating bodies 25 and 30 are measured by a pressure sensor (not drawn) installed in each floating body and the pressure measured values are transmitted to the control board 61 by a signal line. Even in each of the floating bodies 26 to 29, a pressure sensor for measuring the inner pressure is installed.

When the respective pressures in the floating bodies 25 to 30 must be adjusted to keep the posture of the movable body 2 in the horizontal state, the valve installed on the pipe connected to the corresponding floating body and the valve 46 installed on the air hose 46 are opened or closed and the blower 44 is driven or stopped based on the pressure measured value from the pressure sensor installed in each floating body, thus the pressure of the floating body is adjusted. For example, when the pressure in the floating body 25 is low and the leading portion of the movable body 2 is lowered, the valve 38 is opened and the blower 44 is driven, thus air is supplied into the floating body 25 until the leading portion of the movable body 2 is lifted up. At this time, the valves 39 to 43 and 47 are totally enclosed. When the leading portion of the movable body 2 is lifted up and the movable body 2 is put into the horizontal state, the blower 44 is stopped and the valve 38 is totally enclosed. Inversely, when the pressure in the floating body 25 is increased and the leading portion of the movable body 2 is directed upward, the blower 44 is put into the stop state, and the valves 39 to 43 and 47 are put into the totally enclosed state. After that, the valves 38 and 47 are opened. The air in the floating body 25 is discharged out through the pipe 32 and the air hoses 45 and 46. Therefore, the pressure in the floating body 25 is lowered, and the leading portion of the movable body 2 descends, and the movable body 2 is held in the horizontal state. When the movable body 2 enters the horizontal state, the valves 38 and 47 are totally enclosed. Even when adjusting the pressure in each floating body except the floating body 25, the switching operation of the corresponding valves is performed as with the aforementioned valves. The valves 38 to 43 and 47 and furthermore the valve installed in correspondence with the residual one floating body installed on the outer surface of the cylindrical side wall of the base body 62 are a buoyancy adjusting apparatus for adjusting the air pressure in each inside of the floating bodies 25 to 30 and the above residual one floating body to adjust the buoyancy acting on the movable body 2.

The high-pressure pump 17 is driven by the control command output from the control board 61. Water supplied to the high-pressure pump 17 is pressurized by the high-pressure pump 17 and is discharged to the high-pressure hose 18 as high-pressure water. The supply of water to the high-pressure pump 17 is performed from a water tank (not drawn). The high-pressure water is introduced into the base body 62 through the high-pressure hose 18 and reaches the inside of the pipe 23. The valve 24 is opened by the control command from the control board 61. At this time, the valve 20 is totally enclosed. The high-pressure water reaching the inside of the pipe 23 is jetted from the jet nozzle 22. The high-pressure water jetted from the jet nozzle 22 into the cooling water in the reactor pressure vessel 66 gives driving force to the movable body 2. Therefore, the movable body 2 advances in the opposite direction to the jet direction of the high-pressure water. The illuminations 65A and 65B installed on the movable body 2 are turned on and the camera 64 takes a photograph. The image taken by the camera 64 is transferred to a monitor (not drawn) installed on the aforementioned floor through the cable and is displayed on the monitor.

Then, the leading portion of the movable body 2, for example, the floating bodies 30 and 25 and the leading portion of the base body 62 enter the horizontal portion 68 of the pipe 67 (a state shown in (B) of FIG. 1). The movable body 2 advances in the horizontal portion 68 by the jet of the high-pressure water from the jet nozzle 22 and reaches the curve pipe portion 69. Here, by the control command from the control board 61, the valves 38 and 43 are opened and the blower 44 is driven. Air discharged from the blower 44 is supplied into the floating bodies 25 and 30. Each buoyancy of the floating bodies 25 and 30 is increased and the leading portion of the movable body 2 is lifted up by the floating bodies 25 and 30. After each buoyancy of the floating bodies 25 and 30 is increased, the blower 44 is stopped and the valves 38 and 43 are closed. The valves 39, 40, and 47 are opened by the control command from the control board 61 and the air in the floating bodies 28 and 29 is discharged out. Therefore, the movable body 2 jetting the high-pressure water from the jet nozzle 22 can easily pass through the curve tube portion 69 (a state shown in (C) of FIG. 1). The movable body 2 with each buoyancy of the floating bodies 25 and 30 increased ascends in the vertical pipe 70 by jetting the high-pressure water. When the movable body 2 passed through the curve pipe portion 69, air is supplied to the floating bodies 25 and 30 and the buoyancy acting on the movable body 2 is increased. Operator confirms the image photographed by the camera 64 and displayed on the monitor and when the movable body 2 reaches the vicinity of the preventive maintenance execution position in the vertical pipe portion 70, the high-pressure pump 17 is stopped by the control command from the control board 61. By the control command from the control board 61, degree of each opening of the valves 38, 39, 40, 43, and 47 is controlled and each pressures in the floating bodies 25, 28, 29, and 30 are regulated. By doing this, the buoyancy by the floating bodies 25, 28, 29, and 30 is adjusted and when the movable body 2 ascending in the vertical pipe portion 70 reaches the preventive maintenance execution position, the ascent of the movable body 2 is stopped. Thereafter, the movable body 2 is held on the inner surface of the vertical pipe portion 70 by the clamp apparatuses 48A and 48B. The holding of the movable body 2 by the clamp apparatuses 48A and 48B will be explained below in detail.

The blower 59 is driven by the control command from the control board 61 and the air pressurized by the blower 59 is supplied to a region on the rear side of the piston 56 in the cylinder 55 of each of the drive apparatuses 54 moving through the respective pressing members 49 of the three clamp apparatuses through the air hose 60. The piston is moved by the action of the pressurized air, and the piston rod 57 is pressed out from the cylinder 54 toward the floating body 25. As a consequence, the connection member 58 moves toward the floating body 25. The slide plate 52 also moves in the same direction with the movement of the connection member 58. In correspondence with the movement of the slide plate 52 toward the floating body 25, the links 50A and 50B and moreover the link 51 start up (refer to FIG. 7) and then the pressing members 49 are pressed to the inner surface of the vertical pipe portion 70 by the links 50A and 50B. The respective pressing members 49 of the clamp apparatuses 48A and 48B are pressed against the inner surface of the vertical pipe portion 70, so that the movable body 2 is held on the inner surface of the vertical pipe portion 70. When the movable body 2 is held on the inner surface of the vertical pipe portion 70, the drive of the blower 59 is stopped. The movable body 2 in the vertical pipe portion 70 is held on the inner surface of the vertical pipe portion 70 by the three clamp apparatuses.

And, the preventive maintenance operation for the inner surface of the vertical pipe portion 70, that is, the residual stress improvement operation is executed by the water jet peening apparatus 3.

By the control command from the control board 61, the valve 24 is closed, the valve 20 is opened, and the high-pressure pump 17 is driven. The high-pressure water discharged from the high-pressure pump 17 is introduced into the chamber 8 through the high-pressure hose 18, the pipe 19A, and the high-pressure hose 19B. The high-pressure water furthermore flows into the water supply path 9 in the rotary shaft 5 through a plurality of openings 6 formed in the rotary shaft 5 and is supplied into the cavitation generator 4. In the cavitation generator 4, cavitation bubbles are generated in the high-pressure water. The high-pressure water containing the cavitation bubbles is supplied to the jet nozzle 4A by the water supply path 10A and is supplied to the jet nozzle 4B by the water supply path 10B. The high-pressure water containing the cavitation bubbles jetted from the respective jet nozzles 4A and 4B is jetted toward the preventive maintenance execution position on the inner surface of the vertical pipe portion 70. The jet nozzles 4A and 4B jetting the high-pressure water rotate around the central axis of the base body 62 by the rotation of the cavitation generator 4.

The rotation of the cavitation generator 4 will be explained below. The motor 7 is rotated by the control command from the control board 61. Furthermore, the rotary shaft 5 is rotated, and in correspondence with it, the cavitation generator 4 is rotated. Consequently, the jet nozzles 4A and 4B rotate along the inner surface of the vertical pipe portion 70. Since the rotary shaft 5 rotates in the chamber 8, even during the rotation of the rotary shaft 5, the high-pressure water supplied into the chamber 8 flows into the rotary shaft 5 through each of the openings 6. Therefore, the jet nozzles 4A and 4B jet the high-pressure water containing the cavitation bubbles toward the inner surface of the vertical pipe portion 70 during rotating, so that the water jet peening is executed for all the surface in the peripheral direction on the inner surface of the vertical pipe portion 70. As a result, residual compression stress is given to all the surface in the peripheral direction on the inner surface of the vertical pipe portion 70.

While the high-pressure water is jetted from the jet nozzles 4A and 4B and the water jet peening is executed for the inner surface of the vertical pipe portion 70, the illuminations 65A and 65B are turned on in the respective camera units 63A and 63B and the jet state of the high-pressure water containing the cavitation bubbles from the jet nozzles 4A and 4B is photographed by the camera 64. The image of the jet state of the high-pressure water photographed by each of the camera units is displayed on the aforementioned monitor and the jet state of the high-pressure water can be monitored.

The motor 14 of the nozzle movable unit 13 is driven by the control command from the control board 61. The ball screw 15 is rotated by the drive of the motor 14 and the nut 12 mating with the ball screw 15 moves in the axial direction of the base body 62. As a result, the slide plate 11 also moves in the axial direction of the base body 62 and the jet nozzles 4A and 4B jetting the high-pressure water and rotating move in the axial direction of the base body 62. The residual compression stress can be given all over the periphery of the inner surface of the vertical pipe portion 70 with a certain width in the axial direction of the vertical pipe portion 70 by the rotation of the motor 14 in the state that the movable body 2 is held on the inner surface of the vertical pipe portion 70.

When the preventive maintenance operation for giving the residual compression stress to another position of the vertical pipe portion 70 must be performed, the blower 59 is driven by the control command from the control board 61 and the air is supplied to the region on the side of the floating body 25 for the piston 56 in the cylinder 55 of each of the moving drive apparatuses 54 moving through the respective pressing members 49 of the three clamp apparatuses. The piston 56 moves toward the rear side of the base body 62 and the connection member 58 moves toward the cylinder 55. As a result, the links 50A and 50B are let lie idle (refer to FIG. 6) and the pressing members 49 are separated from the inner surface of the vertical pipe portion 70. Pressurized air is supplied from the blower 44 into the floating bodies 25, 28, 29, and 30 and the buoyancy is increased. The movable body 2 ascends in the vertical pipe portion 70 and ascends to another preventive maintenance execution position. When the movable body 2 reaches this preventive maintenance execution position, as aforementioned, the buoyancy of the floating bodies 25, 28, 29, and 30 is adjusted and the ascent of the movable body 2 is stopped. Thereafter, as aforementioned, the movable body 2 is held on the inner surface of the vertical pipe portion 70 by the clamp apparatuses 48A and 48B. The high-pressure water containing cavitation bubbles is jetted from the jet nozzles 4A and 4B and at the position, the water jet peening is executed all over the periphery of the inner surface of the vertical pipe portion 70.

After end of the preventive maintenance operation for the inner surface of the vertical pipe portion 70, the air in the floating bodies 25, 28, 29, and 30 is discharged out from the air hose 46. The buoyancy by the floating bodies 25, 28, 29, and 30 is reduced, thus the movable body 2 descends in the vertical pipe portion 70. The inner surface of the vertical pipe portion 70 for which the preventive maintenance operation is performed is photographed by the camera 64 during the descent of the movable body 2 and the image is displayed on the aforementioned monitor. An execution state of the preventive maintenance operation in the inner surface of the vertical pipe portion can be inspected by seeing the image displayed on the monitor. An operator pulls the high-pressure hose 18, the air hoses 45 and 60, and the cable on the aforementioned floor and moves the movable body 2 through the curve pipe portion 69 to the horizontal pipe portion 68. When pulled out from the horizontal pipe portion 68 into the reactor pressure vessel 66, for the movable body 2 rises to the surface thereof, pressurized air is supplied into the floating bodies 25, 28, 29, and 30 in the horizontal pipe portion 68 and the buoyancy of the movable body 2 is increased. The high-pressure hose 18, the air hoses 45 and 60, and the cable are pulled more, thus the movable body 2 is pulled out from the horizontal pipe portion 68 to the cooling water 72 in the reactor pressure vessel 66. The movable body 2 pulled out ascends toward the liquid surface of the cooling water 72 by the buoyancy of each floating body. The movable body 2 rising to the liquid surface of the cooling water 72 is collected from the inside of the cooling water 72.

In this way, the preventive maintenance operation for the inner surface of the pipe 67 including the horizontal pipe portion 68, the curve pipe portion 69, and the vertical pipe portion 70 which is connected to the reactor pressure vessel 66 and is internally filled with the cooling water 72 finishes.

According to the present embodiment, the movable body 2 of the preventive maintenance apparatus 1 has a plurality of floating bodies such as the floating bodies 25, 26, 27, 28, 29, and 30, so that the preventive maintenance operation for the inner surface of the pipe 67 connected to the reactor pressure vessel 66 with the cooling water 72 filled, and including the horizontal pipe portion 68, the curve pipe portion 69, and the vertical pipe portion 70 can be easily executed. Particularly, even when the pipe 67 is in the state that the lower end portion thereof is connected to the reactor pressure vessel 66 and the movable body 2 cannot be inserted into the pipe 67 from the upper portion, since the moving body 2 is provided with a plurality of floating bodies, the movable body 2 can be easily inserted into the pipe 67 through the opening which is formed at the lower edge of the pipe 67 and is released into the reactor pressure vessel 66. As a result, the preventive maintenance operation for the inner surface of the pipe 67 can be executed.

The present embodiment has the buoyancy adjusting apparatus, so that the air pressure in each inside of the floating bodies 25, 26, 27, 28, 29 and 30 can be easily adjusted, thus the movement of the movable body 2 in the pipe 67 can be easily controlled. Particularly, when the movable body 2 is inserted into the curve pipe portion 69, the air pressure in the floating bodies 25 and 30 is increased by the buoyancy adjusting apparatus and the buoyancy acting on the leading portion of the movable body 2 is increased. Consequently, the insertion of the movable body 2 into the curve pipe portion 69 and the movement thereof in the curve pipe portion 69 can be performed smoothly. Further, since the air pressure in the floating bodies 25, 28, 29, and 30 is adjusted by the buoyancy adjusting apparatus when the movable body 2 ascends in the vertical pipe portion 70, the ascent velocity of the movable body 2 in the vertical pipe portion 70 can be adjusted and the movable body 2 can be stopped at the preventive maintenance operation position in the vertical pipe portion 70.

The motor (the nozzle rotation unit) 7 is installed in the movable body 2, so that the jet nozzles 4A and 4B can be rotated along the inner surface of the pipe 67 in the pipe 67 and the residual compression stress can be given all over the periphery of the inner surface.

The valves 20 and 24 are switched to on or off, thus the high-pressure water discharged from the high-pressure pump 17 can be supplied to the jet nozzle 22 when driving the movable body 2 and to the jet nozzles 4A and 4B when executing the water jet peening for the inner surface of the pipe 67. Since the high-pressure pump 17 can be shared by the water jet peening apparatus 3 and the driving apparatus 21, the constitution of the preventive maintenance apparatus 1 can be simplified.

Further, a head for ultrasonic test or a head for eddy current test is attached to the base body 62 in place of the cavitation generator 4, thus the preventive maintenance apparatus 1 can be used as non destructive examination equipment for performing a non destructive examination for the inner surface of the pipe 67.

Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

### [REFERENCE SIGNS LIST]

1 : preventive maintenance apparatus 2 : movable body 3 : water jet peening apparatus 4A, 4B, 22 : jet nozzle 4 : cavitation generator 5 : rotary shaft 7, 14 : motor 13 : nozzle movable unit 17 : high-pressure pump 21 : driving apparatus 25, 26, 27, 28, 29, 30 : floating body 38, 39, 40, 41, 42, 43, 47 : valve 44, 59: blower 48A, 48B : clamp apparatus 61 : control board 62 : base body 63A, 63B : camera unit 66 : reactor pressure vessel 67 : pipe 68 : horizontal pipe portion 69 : curve pipe portion 70: vertical pipe portion 71 : air supply apparatus.

## Claims

1. A preventive maintenance apparatus comprising:
a base body (62);
a driving apparatus (21) installed on said base body (62) for advancing said base body (62);
a water jet peening apparatus (3) installed on said base body (62);
a plurality of first floating bodies (25) respectively installed at a leading portion and on a rear of said base body (62);
a plurality of clamp apparatuses 48A, 48B) installed on said base (62) body for making contact with an inner surface of a piping (67) when holding said base body (62) in said piping; and
a camera (63A, 63B) installed on said base body (62).

2. The preventive maintenance apparatus according to claim 1, comprising:
an air supply apparatus (71) installed on said base body (62) and communicated with each of said plurality of first floating bodies; and
a buoyancy adjusting apparatus installed on said air supply apparatus (71) for regulating respective air pressures in said plurality of first floating bodies.

3. The preventive maintenance apparatus according to claim 1 or 2,
wherein said driving apparatus (21) has a first jet nozzle installed on said rear of said base body for jetting pressurized water; and
wherein said water jet peening apparatus (3) has a water jet peening bubble generation apparatus for generating water jet peening bubbles in said pressurized water; and a second jet nozzle for jetting said pressurized water containing said water jet peening bubbles.

4. The preventive maintenance apparatus according to claim 3, comprising:
a pressurized water supply apparatus; a pressurized water supply pipe connected to said pressurized water supply apparatus for supplying said pressurized water discharged from said pressurized water supply apparatus to said first jet nozzle and said water jet peening bubble generation apparatus; and a switching apparatus for switching supply of said pressurized water to said first jet nozzle and supply of said pressurized water to said water jet peening bubble generation apparatus and installed on said pressurized water supply pipe.

5. The preventive maintenance apparatus according to claim 4, comprising:
a nozzle rotation unit for rotating said water jet peening bubble generator and installed on said base body;
wherein said second jet nozzle is attached to said water jet peening bubble generation apparatus.

6. The preventive maintenance apparatus according to any one of claims 1 to 5,
wherein second floating bodies are joined to said first floating bodies installed at said leading portion of said base body (62) by a flexible connection member; and
wherein said air supply apparatus (71) is an air supply apparatus for supplying air to said second floating bodies; and
wherein said buoyancy adjusting apparatus is a buoyancy adjusting apparatus for also adjusting air pressure in said second floating bodies.

7. A preventive maintenance method for an inner surface of piping, comprising steps of:
lowering a preventive maintenance apparatus (1) having a base body (62), a driving apparatus (21) installed on said base body (62) for advancing said base body (62), a water jet peening apparatus (3) installed on said base body (62), a plurality of first floating bodies respectively installed at a leading portion and on a rear of said base body (62), a plurality of clamp apparatuses (48A, 48B) installed on said base body (62) for making contact with an inner surface of said piping (67) when holding said base body (62) in said piping (67), and a camera (63A, 63B) installed on said base body (62) into water in a reactor pressure vessel;
thereafter, inserting said preventive maintenance apparatus into said piping connected to said reactor pressure vessel (66) for containing water internally filled through an opening of said piping (67) released into said reactor pressure vessel (66);
holding said preventive maintenance apparatus (1) in said piping (67) by pressing said plurality of clamp apparatuses (48A, 48B) against said inner surface of said piping (67); and
executing a preventive maintenance operation for said inner surface of said piping (67) using said water jet peening apparatus (3).

8. The preventive maintenance method for an inner surface of piping (67) according to claim 7, wherein the execution of said preventive maintenance operation is a preventive maintenance operation executed for an inner surface of a vertical pipe portion of said piping (67).

9. The preventive maintenance method for an inner surface of piping according to claim 7 or 8, comprising steps of:
supplying air into said respective first floating bodies by an air supply apparatus (71) installed on said base body (62); and
adjusting respective air pressures in said first floating bodies with a buoyancy adjusting apparatus installed on said air supply apparatus (71).

10. The preventive maintenance method for an inner surface of piping according to any one of claims 7 to 9, comprising a step of:
switching supply of pressurized water to a first jet nozzle included in said driving apparatus (21) and installed on a rear of said base body (62) from a pressurized water supply apparatus and supply of said pressurized water to a second jet nozzle of said water jet peening apparatus (3) from said pressurized water supply apparatus.

11. The preventive maintenance method for an inner surface of piping (67) according to any one of claims 7 to 10, comprising steps of:
supplying air to second floating body joined to said first floating body installed at said leading portion of said base body (62) with a flexible connection member; and
adjusting air pressure in said second floating body with said buoyancy adjusting apparatus.
